# EUROPEAN PATENT SPECIFICATION

(11) **EP 2 798 720 B1**
(45) Date of publication and mention of the grant of the patent: **25.10.2017**
(21) Application number: 12861647.1
(22) Date of filing: 04.12.2012
(51) Int. Cl.: H02J 7/02, B60L 3/00, B60L 3/12, B60L 11/18, H02J 7/00, H02J 7/04

(54) **CHARGING DEVICE, METHOD FOR CONTROLLING CHARGING DEVICE AND METHOD FOR DETECTING PERIPHERAL DEVICE**
LADEVORRICHTUNG, VERFAHREN ZUR STEUERUNG DER LADEVORRICHTUNG UND VERFAHREN ZUR ERFASSUNG EINER PERIPHERIEVORRICHTUNG
DISPOSITIF DE CHARGEMENT, PROCÉDÉ DE COMMANDE DE DISPOSITIF DE CHARGEMENT, ET PROCÉDÉ DE DÉTECTION DE DISPOSITIF PÉRIPHÉRIQUE

(30) Priority: 28.12.2011 CN 201110445376
(43) Date of publication of application: 05.11.2014
(73) Proprietor: Shenzhen BYD Auto R&D Company Limited, Shenzhen, Guangdong 518118 (CN); BYD Company Limited, Shenzhen, Guangdong 518118 (CN)
(72) Inventor: WANG, Xinghui, Shenzhen Guangdong 518118 (CN); ZHANG, Jianhua, Shenzhen Guangdong 518118 (CN); SHEN, Xiaofeng, Shenzhen Guangdong 518118 (CN); NIU, Kaihua, Shenzhen Guangdong 518118 (CN); CHEN, Xiao, Shenzhen Guangdong 518118 (CN); HUANG, Jianwei, Shenzhen Guangdong 518118 (CN); ZONG, Chaojie, Shenzhen Guangdong 518118 (CN); LIU, Lin, Shenzhen Guangdong 518118 (CN)
(74) Representative: m patent group
(86) International application number: PCT/CN2012/085875
(87) International publication number: WO 2013/097583

(56) References cited:
- CN-A- 101 740 947
- CN-U- 201 918 773
- JP-A- 2010 226 818
- US-A- 5 614 808
- US-A1- 2009 102 433
- US-A1- 2010 301 810
- US-A1- 2011 140 835

## Description

### CROSS-REFERENCE TO RELATED APPLICATION

This application claims priority to, and benefits of Chinese Patent Application Serial No. 201110445376.X, filed with the State Intellectual Property Office of P. R. C. on December 28, 2011, the entire contents of which are incorporated herein by reference.

### TECHNICAL FIELD

The present disclosure relates generally to an electronic device, and more particularly, to a charging device, a method for controlling a charging device and a method for detecting a peripheral device to be charged by a charging device.

### BACKGROUND

An automobile is widely used, and a technology of the automobile is developed rapidly. Because of an energy crisis, an electric vehicle becomes a new and competitive alternative and a charging cabinet is also developed.

A traditional charging cabinet needs to meet different charging requirements of different electric vehicles, which leads to a possibility of a charging fault. In addition, an anode and a cathode of a charging entrance of the electric vehicle may be reversely connected after a manufacturing or a repairing, which may result in an abnormal charging. Therefore, a high debugging for the charging entrance before the charging is needed. However, as the traditional charging cabinet is inconvenient to be moved because of a huge size, the electric vehicle must be moved to the charging cabinet to perform the charging debugging, which is inconvenient.

In addition, the inventor of the present disclosure found that the traditional charging cabinet can only detect whether the charging entrance is abnormal, but can not determine where the charging fault appears. Therefore, it needs a professional person to check the charging cabinet to confirm where the charging fault appears, which may be time and cost consuming.

US2009/ 0102433A1 discloses a charge control device for a vehicle mounted with a power storage device for driving the vehicle , the charge control device being capable of charging the power storage device with a supply electric power from a power supply outside the vehicle in a case where the vehicle and the power supply are connected by a connector.

US 2010/0301810A1 discloses methods and systems to charge a vehicle battery from an external power source. The system includes a sensor configured to detect an electrical current received from the external source and a processor configured to determine a charging schedule related to charging the vehicle battery.

US 2011/0140835A1 discloses an electronic device that includes an interface that connects to a charging apparatus and exchanges authentication information with a server via a network.

### SUMMARY

According to an embodiment of the present disclosure, a charging device comprises: a charging gun comprising a connection unit and a receiving unit; a low voltage auxiliary power source; a power module, configured to convert an AC electricity to a DC electricity; and a controlling module, connected with the charging gun, the low voltage auxiliary power source and the power module respectively, for controlling the low voltage auxiliary power source to supply power to a circuit with the controlling module, wherein when judging the charging gun is connected with a peripheral device, the connection confirming unit sends a connection confirming signal to the controlling module; after receiving the connection confirming signal, the controlling module triggers a first request to the receiving unit; and if the controlling module receives a first report in response to the first request from the receiving unit, the controlling module controls the power module to convert the AC electricity to the DC electricity to charge the peripheral device.

In one embodiment, the charging device further comprises a display module for displaying items for instructing the controlling module.

In one embodiment, the display module is an interactive interface.

In one embodiment, the controlling module is further configured to judge whether the first request is a request of a last item to be sent to the receiving unit, if no, reset the low voltage auxiliary power source and trigger a second request to the receiving unit.

In one embodiment, the first request and/or the second request take a form of stopping sending messages to the receiving unit, the first report and/or the second report are time-out reports.

In one embodiment, the messages comprise a capacity message, a current message and a rating power message.

In one embodiment, the charging device further comprises a leakage detecting module connected with the controlling module, wherein the controlling module controls the leakage detecting module to detect a leakage of the charging device.

In one embodiment, the peripheral device comprises a battery management system.

The charging device according to an embodiment of the present disclosure uses the low voltage auxiliary power source and the power module in itself to supply power, which may facilitate a moving of the charging device as well as a charging to the peripheral device. In addition, as the charging device according to the embodiment of the present disclosure uses the controlling module to automatically detect the working state of the charging device before charging the peripheral device, it may increase a safety of the charging.

According to another embodiment of the present disclosure, a method for controlling a charging device is provided, wherein the charging device comprises a connection confirming unit and a receiving unit; a low voltage auxiliary power source; a power module configured to convert an AC electricity to a DC electricity; and a controlling module connected with the charging gun, the low voltage auxiliary power source and the power module respectively, the method comprises steps of: starting the controlling module and the low voltage auxiliary power source to power on a circuit connected with the controlling module; judging whether the charging gun is connected with a peripheral device , and if yes, sending a connection confirming signal to the controlling module; after receiving the connection confirming signal, sending a first request to the receiving unit by the controlling module; judging whether a first report from the receiving unit in response to the first request is received by the controlling module; and if yes, controlling the power module to convert the AC electricity to the DC electricity to charge the peripheral device by the controlling module.

In one embodiment, the method further comprises: the controlling module judging whether the first request is a request of a last item to be sent to the receiving unit; if no, the controlling module sending a second request to the receiving unit and judging whether a second report in response to the second request is received; and if yes, controlling the power module to convert the AC electricity to the DC electricity to charge the peripheral device by the controlling module.

In one embodiment, the first request and/or the second request take a form of stopping sending messages to the receiving unit, and the first report and/or the second report are time-out reports.

In one embodiment, the messages comprise a capacity message, a current message and a rating power message.

In one embodiment, the charging device further comprises a display module for displaying items for instructing the controlling module.

In one embodiment, the charging device further comprises a leakage detecting module connected with the controlling module and the controlling module controls the leakage detecting module to detect a leakage of the charging device.

The method for controlling a charging device according to an embodiment of the present disclosure judges whether the charging device is suitable for charging the peripheral device before the charging, which may increase the safety of the charging. In addition, as the charging device has the low voltage auxiliary power source in itself to supply power, it may facilitate the moving of the charging device as well as the charging.

According to yet another embodiment of the present disclosure, a charging device comprises: a charging gun, for charging a peripheral device; a connection determining unit, for determining whether the charging gun is connected with the peripheral device; a low voltage power source unit, for enabling a communication between the charging device and the peripheral device when the charging gun is connected with the peripheral device; a sending unit, for sending a first message periodically to the peripheral device; a timing unit, for stopping the sending unit from sending the first message after a first time period; a receiving unit, for receiving a first report in response to stopping the sending unit from sending the first message after a first time period from the peripheral device; and a control unit, for determining whether the receiving unit receives the first report within a second time period after stopping the sending unit from sending the first message and if yes, controlling the charging gun to charge the peripheral device.

The charging device according to an embodiment of the present disclosure has the low voltage power source unit in itself, which may facilitate the moving of the charging device as well as the charging to the peripheral device. In addition, as the charging device according to the embodiment of the present disclosure automatically detect whether the connection with peripheral device is normal before charging the peripheral device, it may increase the safety of the charging.

According to still yet another embodiment of the present disclosure, a method for detecting a peripheral device to be charged by a charging device comprises steps of: detecting whether the charging device is connected with a peripheral device; if yes, enabling a communication between the charging device and the peripheral device; sending a first message periodically to the peripheral device; stopping sending the first message after a first time period; determining whether a first report in response to stopping sending the first message after the first time period is received within a second time period from the peripheral device; and if yes, controlling the charging device to charge the peripheral device.

The method for detecting a peripheral device to be charged by a charging device according to an embodiment of the present disclosure detects whether the connection between the charging device and the peripheral device is normal, which may increase the safety of the charging.

Additional aspects and advantages of the embodiments of the present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of the disclosure will become apparent and more readily appreciated from the following descriptions made with reference the accompanying drawings, in which:
FIG.1 is a block diagram showing a charging device according to a first embodiment of the present disclosure;
FIG.2 is a block diagram showing a charging device according to a second embodiment of the present disclosure;
FIG.3 is a block diagram showing a charging device according to a third embodiment of the present disclosure;
FIG.4 is a block diagram showing a charging device according to a fourth embodiment of the present disclosure;
FIG.5 is a flow chart showing a method for controlling a charging device according to an embodiment of the present disclosure; and
Fig.6 is a flow chart showing a method for detecting a peripheral circuit to be charged by a charging gun according to an embodiment of the present disclosure.

### DETAILED DESCRIPTION

Reference will be made in detail to embodiments of the present disclosure. The embodiments described herein with reference to drawings are explanatory, illustrative, and used to generally understand the present disclosure. The embodiments shall not be construed to limit the present disclosure. The same or similar elements and the elements having same or similar functions are denoted by like reference numerals throughout the descriptions.

The charging device according to the present disclosure will be described with reference to accompanied drawings.

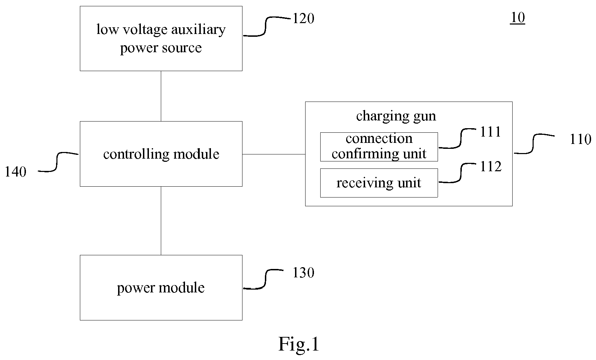

Fig.1 is a block diagram of a charging device according to a first embodiment of the present disclosure. As shown in Fig.1, the charging device 10 comprises a charging gun 110, a low voltage auxiliary power source 120, a power module 130 and a controlling module140. The controlling module 140 is connected with the charging gun 110, the low voltage auxiliary power source 120 and the power module 130 respectively. The charging gun 110 further comprises a connection confirming unit 111 and a receiving unit 112.

The power module 130 is configured to convert an AC electricity to a DC electricity. The controlling module 140 is configured to control the low voltage auxiliary power source 120 to supply power to a circuit connected with the controlling module 140.

When judging the charging gun 110 is connected with a peripheral device (not shown), the connection confirming unit 111 sends a connection confirming signal to the controlling module 140. After receiving the connection confirming signal, the controlling module 140 triggers a first request to the receiving unit 112. If the receiving unit 112 receives the first request from the controlling module 140, it sends a first report in response to the first request to the controlling module 140. After receiving the first report, the controlling module 140 controls the power module 130 to convert the AC electricity to the DC electricity to charge the peripheral device.

In another embodiment, the controlling module 140 may be further configured to judge whether the first request is a request of a last item to be sent to the receiving unit 112. The number and sequence of the requests are pre-set by the controlling module 140. If the first request is not the last request, the controlling module 140 may further reset the low voltage auxiliary power source 120 and trigger a second request to the receiving unit 112.

In some embodiments, the first request and/or the second request may take a form of stopping sending messages to the receiving unit 112, the first report and/or the second report may be a time-out report. Furthermore, the messages may be corresponding to working states of the charging gun respectively, and may include but not be limited to a capacity message, a current message and a rating power message. In other words, after receiving the connection confirming signal from the connection confirming unit 111, the controlling module 140 may stop sending a first message (e.g. the current message) to the receiving unit 112 so as to detect whether the working state corresponding to the first message is normal. If the first report is received by the controlling module 140 in a preset time period, the controlling module 140 determines that the working state corresponding to the first message is normal, and then controls the power module 130 to convert the AC electricity to the DC electricity to charge the peripheral device.

The charging device according to the embodiment of the present disclosure uses the low voltage auxiliary power source and the power module in itself to supply power, which may facilitate a moving of the charging device as well as a charging to the peripheral device. In addition, as the charging device according to the embodiment of the present disclosure uses the controlling module to automatically detect the working state of the charging device before charging the peripheral device, it may increase a safety of the charging.

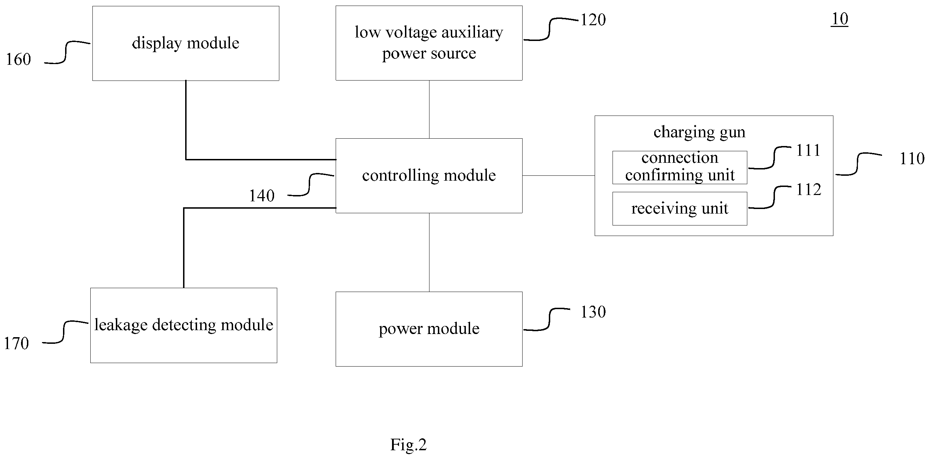

Fig.2 is a block diagram of a charging device according to a second embodiment of the present disclosure. As shown in Fig.2, the difference between the first embodiment and the second embodiment is that the charging device further comprises a display module 160 and a leakage detecting module 170. The display module 160 is configured to display items for instructing the controlling module 140. The leakage detecting module 170 is connected with the controlling module 140, and is controlled by the controlling module 140 to detect a leakage of the charging device 10.

In some embodiments, the display module 160 may be an interactive interface. For example, the display module 160 may comprise a plurality of pilot lamps, in which each pilot lamp may indicate a working state for each item. When the working state of an item is normal, the corresponding pilot lamp is lighted, and when the working state is faulty, the corresponding lamp is dark. Hence, people could simply recognize which item of the working states is faulty, which may otherwise be time and cost consuming.

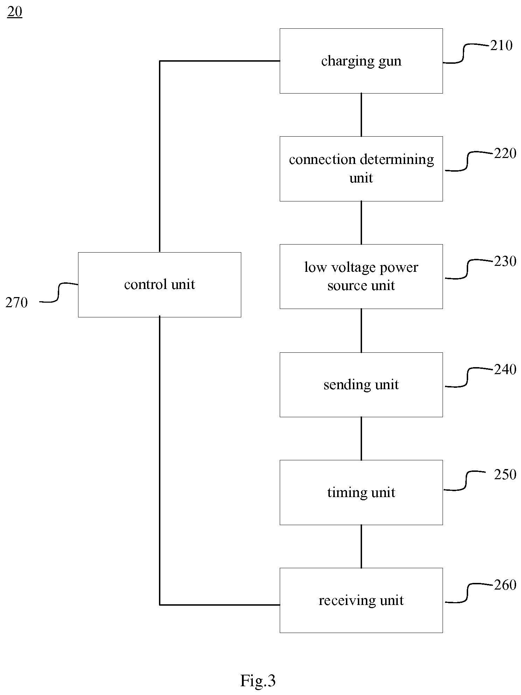

Fig.3 is a block diagram of a charging device according to a third embodiment of the present disclosure. As shown in Fig.3, the charging device 20 comprises a charging gun 210, a connection determining unit 220, a low voltage power source unit 230, a sending unit 240, a timing unit 250, a receiving unit 260 and a control unit 270.

The charging gun 210 is configured to charge a peripheral device (not shown). The connection determining unit 220 is configured to determine whether the charging gun 210 is connected with the peripheral device. The low voltage power source unit 230 is configured to enable a communication between the charging device 20 and the peripheral device when the charging gun 210 is connected with the peripheral device. The low voltage power source unit 230 may provide electricity enough for the communication to the peripheral device. The sending unit 240 is configured to send a first message periodically to the peripheral device. The timing unit 250 is configured to stop the sending unit 240 from sending the first message after a first time period. The receiving unit 260 is configured to receive a first report from the peripheral device, which is in response to stopping the sending unit 240 from sending the first message after the first time period. The control unit 270 is configured to determine whether the receiving unit 260 receives the first report within a second time period after stopping the sending unit 240 from sending the first message and if yes, control the charging gun 210 to charge the peripheral device.

In one embodiment, the first message may be one of a capacity message, a current message, a rating power message and so on, which is corresponding to a working state respectively. Therefore, when the control unit 270 receives the first report in response to stopping the sending unit 240 from sending the first message after the first time period, it indicates that the connection between the charging device 20 and the peripheral device is normal, and thus the charging to the peripheral device could be performed.

In one embodiment, the peripheral may be an electric vehicle, and the charging device may communicate with a battery management system in the electric vehicle, such as through a control area network (CAN).

The charging gun according to an embodiment of the present disclosure has the low voltage power source unit in itself, which may facilitate the moving of the charging device as well as the charging to the peripheral device. In addition, as the charging device according to the embodiment of the present disclosure automatically detect whether the connection with peripheral device is normal before charging the peripheral device, it may increase the safety of the charging.

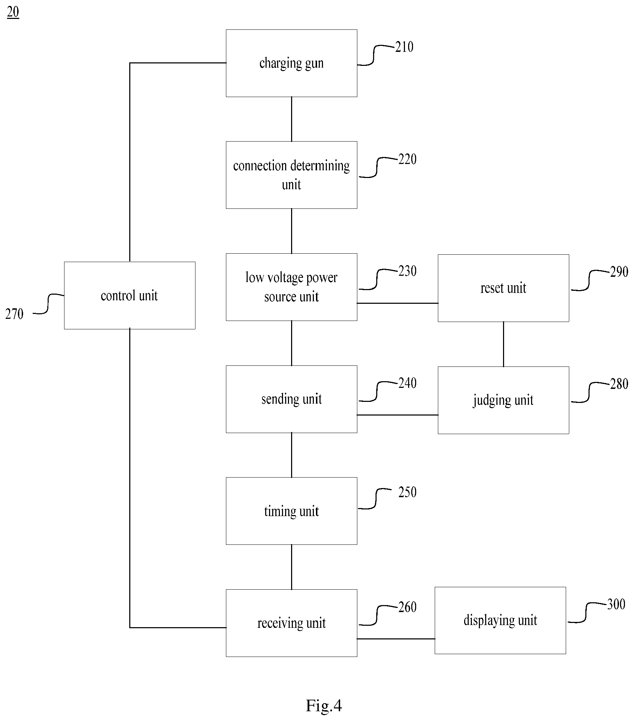

Fig.4 is a block diagram of a charging device according to a fourth embodiment of the present disclosure. As shown in Fig.4, the difference between the third embodiment and the fourth embodiment is that the charging device further comprises a judging unit 280, a reset unit 290 and a displaying unit 300. The judging unit 280 is configured to judge whether the first message is a message of a last item to be sent to the peripheral device. The number and sequence of the messages are pre-set. The reset unit 290 is configured to reset the low voltage power source unit 230 if the first message is not the message of the last item. Furthermore, after resetting the low voltage power source unit 230, the sending unit 240 sends a second message periodically to the peripheral device. After the first time period, the timing unit 250 stops the sending unit 240 from sending the second message. Then, the control unit 270 determines whether the receiving unit 260 receives a second report within the second time period from the peripheral device after stopping the sending unit from sending the second message and if yes, the control unit 270 controls the charging gun 210 to charge the peripheral device. The second message may also be one of the capacity message, the current message, the rating power message and so on, and the second message is different from the first message.

The displaying unit 300 is configured to display information indicating whether the receiving unit 260 receives the first report or the second report within the second time period. In one embodiment, the displaying unit 300 may comprise a plurality of pilot lamps, each pilot lamps is corresponding to a working state of each item respectively. When the working state of an item is normal, the corresponding pilot lamp is lighted, and when the working state is fault, the corresponding lamp is dark. Hence, people could simply recognize which item of the working states is faulty, which may otherwise be time and cost consuming.

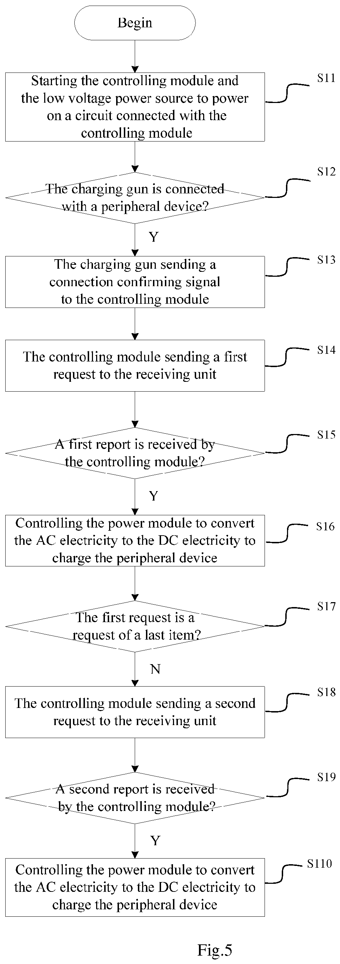

The method for controlling a charging device will be described below with reference to Fig.5.

Fig.5 is a flow chart of the method for controlling a charging device according to an embodiment of the present disclosure. The charging device comprises: a charging gun comprising a connection confirming unit and a receiving unit; a low voltage auxiliary power source; a power module configured to convert an AC electricity to a DC electricity; and a controlling module connected with the charging gun, the low voltage auxiliary power source and the power module respectively. As shown in Fig. 5, the method for controlling the charging device comprises the following steps:
S11, starting the controlling module and the low voltage power source to power on a circuit connected with the controlling module.
S 12, judging whether the charging gun is connected with a peripheral device.
S 13, if the charging gun is connected with the peripheral device, it sends a connection confirming signal to the controlling module.
S 14, after receiving the connection confirming signal, the controlling module sends a first request to the receiving unit.
   In one embodiment, the first request takes a form of stopping sending messages to the receiving unit. The messages may be corresponding to working states of the charging gun respectively, and may include but not be limited to a capacity message, a current message and a rating power message. In other words, after receiving the connection confirming signal from the connection confirming unit, the controlling module may stop sending a first message (e.g. the current message) to the receiving unit so as to detect whether the working state corresponding to the first message is correct.
S15, judging whether a first report from the receiving unit in response to the first request is received by the controlling module.
S16, if the controlling module receives the first report from the receiving unit, it controls the power module to convert the AC electricity to the DC electricity to charge the peripheral device by the controlling module.

In one embodiment, the first report is a time-out report. If the time-out report is received by the controlling module in a preset time period, the controlling module determines that the working state corresponding to the first message is normal and controls the power module to convert the AC electricity to the DC electricity to charge the peripheral device by the controlling module.

In another embodiment of the present disclosure, the method for controlling the charging device may further comprise a step of judging whether the first request is a request of a last item to be sent to the receiving unit (S17), the number and sequence of the requests are pre-set. If no, the controlling module sends a second request to the receiving unit (S18) and then the controlling unit judges whether a second report in response to the second request is received (S19). If the second report in response to the second request is received by the controlling module, the controlling module controls the power module to convert the AC electricity to the DC electricity to charge the peripheral device by the controlling module (S110). Herein, the second request may also take a form of stopping sending messages to the receiving unit.

Furthermore, in one embodiment, the charging device may further comprise a display module for displaying items for instructing the controlling module. Hence, people could simply recognize which item of the working states is faulty, which may otherwise be time and cost consuming. In another embodiment, the charging device may further comprise a leakage detecting module connected with the controlling module. The controlling module controls the leakage detecting module to detect a leakage of the charging device. Hence, the safety of the charging could be further enhanced.

The method for controlling a charging device according to an embodiment of the present disclosure judges whether the charging device is suitable for charging the peripheral device before the charging, which may increase the safety of the charging. In addition, as the charging device has the low voltage auxiliary power source in itself to supply power, it may facilitate the moving of the charging device as well as the charging to the peripheral device.

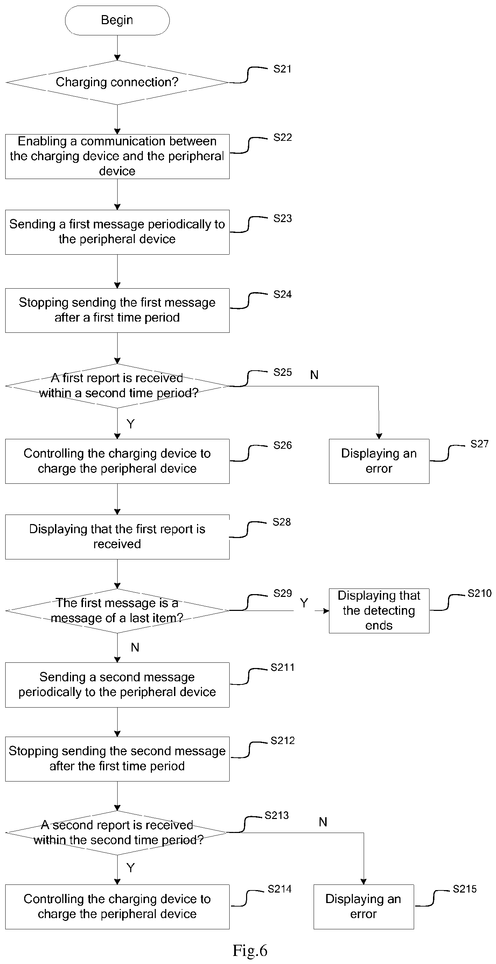

The method for detecting a peripheral device to be charged by a charging device will be described below with reference to Fig.6.

Fig.6 is a flow chart of the method for detecting a peripheral device to be charged by a charging device according to an embodiment of the present disclosure. As shown in Fig.6, the method for detecting a peripheral device to be charged by a charging device may comprise the following steps:
S21, detecting whether the charging device is connected with a peripheral device.
   In one embodiment, the peripheral device may be an electric vehicle.
S22, if the charging device is connected with the peripheral device, enabling a communication between the charging device and the peripheral device.
   A low voltage enough for communication may be provided to the peripheral device.
   In one embodiment, the charging device communicates with a battery management system in the electric vehicle, such as through the CAN.
S23, sending a first message periodically to the peripheral device, such as one first message per 2 seconds.
   In one embodiment, the first message may be one of a capacity message, a current message and a rating power message.
S24, stopping sending the first message after a first time period, such as 10 seconds.
S25, determining whether a first report in response to stopping sending the first message after the first time period is received from the peripheral device within a second time period.
   In one embodiment, the peripheral device is configured to send a first report if it does not receive the first request in the second time period, such as 4 seconds. In other words, if the first report is received within the second time period, it indicates that the connection between the charging device and the peripheral device is normal, and the charging to the peripheral device could be performed.
S26, if yes, controlling the charging device to charge the peripheral device.

In another embodiment of the present disclosure, the method for detecting the peripheral device to be charged by the charging device may further comprise a step of displaying an error if the first report in response to stopping sending the first message after the first time period is not received within the second time period from the peripheral device (S27) and a step of displaying that the first report is received within the second time period (S28). Hence, people could simply recognize which item of the working states is faulty, which may otherwise be time and cost consuming.

In yet another embodiment of the present disclosure, the method for detecting the peripheral device to be charged by the charging device may also further comprise a step of determining whether the first message is a message of a last item (S29), the number and sequence of messages are pre-set. If the first message is the message of the last item, performing a step of displaying that the detecting ends (S210). If the first message is not the message of the last item, sending a second message periodically to the peripheral device (S211), and stopping sending the second message after the first time period (S212). Then, determining whether a second report in response to stopping sending the second message after the first time period is received within the second time period from the peripheral device (S213), if yes, controlling the charging device to charge the peripheral device (S214); and if no, displaying an error (S215). The second message may also be one of the capacity message, the current message and the rating power message. In one embodiment, after step 213, the method may comprise a step of judging whether the second message is the message of the last item and this kind of judge will be repeated until the message is the message of the last item as pre-set.

The method for detecting the peripheral device to be charged by the charging device according to an embodiment of the present disclosure detects whether the connection between the charging device and the peripheral device is normal, which may increase the safety of the charging.

It will be appreciated by those skilled in the art that changes could be made to the examples described above without departing from the broad inventive concept. It is understood, therefore, that this disclosure is not limited to the particular examples disclosed, but it is intended to cover modifications within the spirit and scope of the present disclosure as defined by the appended claims.

## Claims

1. A method for detecting a peripheral device to be charged by a charging device, comprising steps of:
detecting whether the charging device is connected with a peripheral device (S21);
if yes, enabling a communication between the charging device and the peripheral device (S22);
sending a first message periodically to the peripheral device (S23);
stopping sending the first message after a first time period (S24);
determining whether a first report in response to stopping sending the first message after the first time period is received from the peripheral device within a second time period (S25); and
if yes, controlling the charging device to charge the peripheral device (S26).

2. The method according to claim 1, further comprising:
if the first report in response to stopping sending the first message after the first time period is not received from the peripheral device within the second time period, displaying an error (S27).

3. The method according to claim 1 or 2, further comprising:
displaying that the first report is received within the second time period (S28).

4. The method according to any one of claims 1-3, further comprising:
determining whether the first message is a message of a last item (S29); and
if yes, displaying that the detecting ends (S210).

5. The method according to any one of claims 1-4, further comprising:
if the first message is not the message of the last item, resetting the communication between the charging device and the peripheral device;
sending a second message periodically to the peripheral device (S211);
stopping sending the second message after the first time period (S212);
determining whether a second report in response to stopping sending the second message after the first time period is received from the peripheral device within the second time period (S213);
if yes, controlling the charging device to charge the peripheral device (S214); and
if no, displaying the error (S215).

6. The method according to any one of claims 1-5, wherein the first message or the second message is one of a capacity message, a current message and a rating power message.

7. The method according to any one of claims 1-6, wherein the peripheral device is an electric vehicle.

8. The method according to claim 7, wherein the charging device communicates with a battery management system in the electric vehicle.

9. A charging device (20), comprising:
a charging gun (210), for charging a peripheral device;
a connection determining unit (220), for determining whether the charging gun (210) is connected with the peripheral device;
a low voltage power source unit (230), for enabling a communication between the charging device (20) and the peripheral device when the charging gun (210) is connected with the peripheral device;
a sending unit (240), for sending a first message periodically to the peripheral device;
a timing unit (250), for stopping the sending unit (240) from sending the first message after a first time period;
a receiving unit (260), for receiving a first report in response to stopping the sending unit (240) from sending the first message after a first time period from the peripheral device; and
a control unit (270), for determining whether the receiving unit (260) receives the first report within a second time period after stopping the sending unit (240) from sending the first message and if yes, controlling the charging gun (210) to charge the peripheral device.

10. The charging device (20) according to claim 9, further comprising:
a judging unit (280), for judging whether the first message is a message of a last item to be sent to the peripheral device; and
a reset unit (290), for resetting the low voltage power source unit (230) if the first message is not the message of the last item,
wherein the sending unit (240) sends a second message periodically to the peripheral device; the timing unit (250) stops the sending unit (240) from sending the second message after a first time period; the control unit (270) determines whether the receiving unit (260) receives a second report from the peripheral device within the second time period after stopping the sending unit (240) from sending the second message and if yes, controls the charging gun (210) to charge the peripheral device.

11. The charging device (20) according to claim 9 or 10, wherein the first message or the second message is one of a capacity message, a current message and a rating power message.

12. The charging device (20) according to any of claims 9-11, further comprising:
a displaying unit (300), for displaying information indicating whether the receiving unit (260) receives the first report or the second report within the second time period.

13. The charging device (20) according to any of claims 9-12, wherein the peripheral device is an electric vehicle.

14. The charging device (20) according to claim 13, wherein the charging device communicates with a battery management system in the electric vehicle.

## Patentansprüche

1. Verfahren zum Erfassen einer peripheren Vorrichtung, um von einer Ladevorrichtung geladen zu werden, umfassend Schritte des:
Erfassens, ob die Ladevorrichtung mit einer peripheren Vorrichtung verbunden ist (S21);
wenn ja, Aktivierens einer Kommunikation zwischen der Ladevorrichtung und der peripheren Vorrichtung (S22);
Sendens einer ersten Nachricht periodisch an die periphere Vorrichtung (S23);
Stoppens des Sendens der ersten Nachricht nach einer ersten Zeitperiode (S24);
Bestimmens, ob ein erster Bericht in Reaktion auf das Stoppen des Sendens der ersten Nachricht nach der ersten Zeitperiode von der peripheren Vorrichtung innerhalb einer zweiten Zeitperiode empfangen wird (S25); und
wenn ja, Steuerns der Ladevorrichtung, um die periphere Vorrichtung zu laden (S26).

2. Verfahren nach Anspruch 1, ferner umfassend:
Wenn der erste Bericht in Reaktion auf das Stoppen des Sendens der ersten Nachricht nach der ersten Zeitperiode von der peripheren Vorrichtung innerhalb der zweiten Zeitperiode nicht empfangen wird, Anzeigen eines Fehlers (S27).

3. Verfahren nach Anspruch 1 oder 2, ferner umfassend:
Anzeigen, dass der erste Bericht innerhalb der zweiten Zeitperiode empfangen wird (S28).

4. Verfahren nach einem der Ansprüche 1-3, ferner umfassend:
Bestimmen, ob die erste Nachricht eine Nachricht einer letzten Einheit ist (S29); und
wenn ja, Anzeigen, dass das Erfassen endet.

5. Verfahren nach einem der Ansprüche 1-4, ferner umfassend:
Wenn die erste Nachricht nicht die Nachricht der letzten Einheit ist, Zurücksetzen der Kommunikation zwischen der Ladevorrichtung und der peripheren Vorrichtung;
Senden einer zweiten Nachricht periodisch zu der peripheren Vorrichtung (S211);
Stoppen des Sendens der zweiten Nachricht nach der ersten Zeitperiode (S212);
Bestimmen, ob ein zweiter Bericht in Reaktion auf das Stoppen des Sendens der zweiten Nachricht nach der ersten Zeitperiode von der peripheren Vorrichtung innerhalb der zweiten Zeitperiode empfangen wird (S213);
wenn ja, Steuern der Ladevorrichtung, um die periphere Vorrichtung zu laden (S214); und
wenn nein, Anzeigen des Fehlers (S215).

6. Verfahren nach einem der Ansprüche 1-5, wobei die erste Nachricht oder die zweite Nachricht eine von einer Kapazitätsnachricht, einer Stromnachricht und einer Bewertungsenergienachricht ist.

7. Verfahren nach einem der Ansprüche 1-6, wobei die periphere Vorrichtung ein elektrisches Fahrzeug ist.

8. Verfahren nach Anspruch 7, wobei die Ladevorrichtung mit einem Batteriemanagementsystem in dem elektrischen Fahrzeug kommuniziert.

9. Ladevorrichtung (20) umfassend:
eine Ladepistole (210) zum Laden einer peripheren Vorrichtung;
eine Verbindungsbestimmungseinheit (220) zum Bestimmen, ob die Ladepistole (210) mit der peripheren Vorrichtung verbunden ist;
eine Niedervoltenergiequelleneinheit (230) zum Aktivieren einer Kommunikation zwischen der Ladevorrichtung (20) und der peripheren Vorrichtung, wenn die Ladepistole (210) mit der peripheren Vorrichtung verbunden ist;
eine Sendeeinheit (240) zum Senden einer ersten Nachricht periodisch zu der peripheren Vorrichtung;
eine Timingeinheit (250) zum Stoppen der Sendeeinheit (240), die erste Nachricht nach einer ersten Zeitperiode zu senden;
eine Empfangseinheit (260) zum Empfangen eines ersten Berichtes in Reaktion auf das Stoppen der Sendeeinheit (240), die erste Nachricht nach einer ersten Zeitperiode von der peripheren Vorrichtung zu senden; und
eine Steuereinheit (270) zum Bestimmen, ob die Empfangseinheit (260) den ersten Bericht innerhalb einer zweiten Zeitperiode nach dem Stoppen der Sendeeinheit (240), eine erste Nachricht zu senden, empfängt und wenn ja, Steuern der Ladepistole (210), um die periphere Vorrichtung zu laden.

10. Ladevorrichtung (20) nach Anspruch 9, ferner umfassend:
eine Beurteilungseinheit (280) zum Beurteilen, ob die erste Nachricht eine Nachricht von einer letzten Einheit ist, um zu der peripheren Vorrichtung gesendet zu werden; und
eine Zurücksetzeinheit (290) zum Zurücksetzen der Niedervoltenergiequelleneinheit (230), wenn die erste Nachricht nicht die Nachricht der letzten Einheit ist,
wobei die Sendeeinheit (240) eine zweite Nachricht periodisch zu der peripheren Vorrichtung sendet; die Timingeinheit (250) die Sendeeinheit (240) stoppt, die zweite Nachricht nach einer ersten Zeitperiode zu senden; die Steuereinheit (270) bestimmt, ob die Empfangseinheit (260) einen zweiten Bericht von der peripheren Vorrichtung innerhalb der zweiten Zeitperiode nach dem Stoppen der Sendeeinheit (240), eine zweite Nachricht zu senden, empfängt und wenn ja,die Ladepistole (210) steuert, um die periphere Vorrichtung zu laden.

11. Ladevorrichtung (20) nach Anspruch 9 oder 10, wobei die erste Nachricht oder die zweite Nachricht eine von einer Kapazitätsnachricht, einer Stromnachricht und einer Bewertungsenergienachricht ist.

12. Ladevorrichtung (20) nach einem der Ansprüche 9-11, ferner umfassend:
eine Anzeigeeinheit (300) zum Anzeigen einer Information, die angibt, ob die Empfangseinheit (260) den ersten Bericht oder den zweiten Bericht innerhalb der zweiten Zeitperiode empfängt.

13. Ladevorrichtung (20) nach einem der Ansprüche 9-12, wobei die periphere Vorrichtung ein elektrisches Fahrzeug ist.

14. Ladevorrichtung (20) nach Anspruch 13, wobei die Ladevorrichtung mit einem Batteriemanagementsystem in dem elektrischen Fahrzeug kommuniziert.

## Revendications

1. Procédé pour détecter un dispositif périphérique devant être chargé par un dispositif de charge, comportant les étapes consistant à :
détecter si le dispositif de charge est connecté à un dispositif périphérique (S21) ;
si oui, activer une communication entre le dispositif de charge et le dispositif périphérique (S22) ;
envoyer périodiquement un premier message au dispositif périphérique (S23) ;
arrêter l'envoi du premier message après une première période de temps (S24) ;
déterminer si un premier rapport en réponse à l'arrêt de l'envoi du premier message après la première période de temps est reçu du dispositif périphérique sur une seconde période de temps (S25) ; et
si oui, commander le dispositif de charge de manière à charger le dispositif périphérique (S26).

2. Procédé selon la revendication 1, comportant en outre :
si le premier rapport en réponse à l'arrêt de l'envoi du premier message après la première période de temps n'est pas reçu du dispositif périphérique sur la seconde période de temps, afficher une erreur (S27).

3. Procédé selon la revendication 1 ou 2, comportant en outre l'étape consistant à :
afficher que le premier rapport est reçu sur la seconde période de temps (S28).

4. Procédé selon l'une quelconque des revendications 1 à 3, comportant en outre l'étape consistant à :
déterminer si le premier message est un message d'un dernier élément (S29) ; et
si oui, afficher que la détection se termine (S210).

5. Procédé selon l'une quelconque des revendications 1 à 4, comportant en outre les étapes consistant à :
si le premier message n'est pas le message du dernier élément, réinitialiser la communication entre le dispositif de charge et le dispositif périphérique ;
envoyer périodiquement un second message au dispositif périphérique (S211) ;
arrêter l'envoi du second message après la première période de temps (S212) ;
déterminer si un second rapport en réponse à l'arrêt de l'envoi du second message après la première période de temps est reçu du dispositif périphérique sur la seconde période de temps (S213) ;
si oui, commander le dispositif de charge de manière à charger le dispositif périphérique (S214) ; et
si non, afficher l'erreur (5215).

6. Procédé selon l'une quelconque des revendications 1 à 5, dans lequel le premier message ou le second message est un message parmi un message de capacité, un message d'intensité et un message de puissance nominale.

7. Procédé selon l'une quelconque des revendications 1 à 6, dans lequel le dispositif périphérique est un véhicule électrique.

8. Procédé selon la revendication 7, dans lequel le dispositif de charge communique avec un système de gestion de batterie dans le véhicule électrique.

9. Dispositif de charge (20) comportant :
un pistolet de charge (210), pour charger un dispositif périphérique ;
une unité de détermination de connexion (220), pour déterminer si le pistolet de charge (210) est connecté au dispositif périphérique ;
une unité de source d'alimentation à basse tension (230), pour activer une communication entre le dispositif de charge (20) et le dispositif périphérique lorsque le pistolet de charge (210) est connecté au dispositif périphérique ;
une unité d'envoi (240), pour envoyer périodiquement un premier message au dispositif périphérique ;
une unité de temporisation (240), pour arrêter l'envoi du premier message par l'unité d'envoi (240) après une première période de temps ;
une unité de réception (260), pour recevoir du dispositif périphérique un premier rapport en réponse à l'arrêt de l'envoi du premier message par l'unité d'envoi (240) après une première période de temps ; et
une unité de commande (270), pour déterminer si l'unité de réception (260) reçoit le premier rapport sur une seconde période de temps après l'arrêt de l'envoi du premier message par l'unité d'envoi (240) et si oui, commander le pistolet de charge (210) de manière à charger le dispositif périphérique.

10. Dispositif de charge (20) selon la revendication 9, comportant en outre :
une unité de jugement (280), pour juger si le premier message est un message d'un dernier élément devant être envoyé au dispositif périphérique ; et
une unité de réinitialisation (290), pour réinitialiser l'unité de source d'alimentation à basse tension (230) si le premier message n'est pas le message du dernier élément, dans lequel l'unité d'envoi (240) envoie périodiquement un second message au dispositif périphérique ; l'unité de temporisation (250) arrête l'envoi du second message par l'unité d'envoi (240) après une période première de temps ;
l'unité de commande (270) détermine si l'unité de réception (260) reçoit un second rapport provenant du dispositif périphérique sur la seconde période de temps après l'arrêt de l'envoi du second message par l'unité d'envoi (240) et si oui, commande le pistolet de chargement (210) de manière à charger le dispositif périphérique.

11. Dispositif de charge (20) selon la revendication 9 ou 10, dans lequel le premier message ou le second message est un message parmi un message de capacité, un message d'intensité et un message de puissance nominale.

12. Dispositif de charge (20) selon l'une quelconque des revendications 9 à 11, comportant en outre :
une unité d'affichage (300), pour afficher des informations indiquant si l'unité de réception (260) reçoit le premier rapport ou le second rapport sur la seconde période de temps.

13. Dispositif de charge (20) selon l'une quelconque des revendications 9 à 12, dans lequel le dispositif périphérique est un véhicule électrique.

14. Dispositif de charge (20) selon la revendication 13, dans lequel le dispositif de charge communique avec un système de gestion de batterie dans le véhicule électrique.
